# EUROPÄISCHE PATENTANMELDUNG

(11) **EP 1 661 624 A1**
(43) Veröffentlichungstag der Anmeldung: **31.05.2006**
(21) Anmeldenummer: 05025704.7
(22) Anmeldetag: 24.11.2005
(51) Int. Cl.: B02C 4/04, A23G 1/10, A23G 7/02

(54) **Walze, insbesondere drehbare Walze für ein Fünfwalzwerk zur Schokoladenherstellung**

(30) Priorität: 24.11.2004 DE 102004056750
(71) Anmelder: F.B. LEHMANN Maschinenfabrik GmbH, D-73431 Aalen (DE)
(72) Erfinder: Essig, Joachim, Dipl.-Ing. (FH), 73540 Heubach (DE); Johansson, Detlef, Dipl.-Ing., 73431 Aalen (DE)
(74) Vertreter: Volpert, Marcus

(57) **Zusammenfassung**

Die Erfindung bezieht sich auf eine Walze mit einem äußeren, zylindrischen Walzenkörper und einer in dem Walzenkörper angeordneten Einrichtung zum Kühlen des Walzenkörpers mittels eines Kühlmittels. Die neue Walze soll wirtschaftlicher gekühlt werden können.

Erfindungsgemäß ist die Kühleinrichtung (3) der Walze (1) auf der Basis einer zwangsgeführten Strömung des Kühlmittels (4) wirkend ausgebildet, wobei die Kühleinrichtung (3) vorzugsweise einen Führungskörper (5) aufweist, welcher in den Walzenkörper (2) einführbar, vorzugsweise einpressbar, ist und auf seiner Außenfläche (6) mehrere an das Kühlmittel (4) anschließbare Kanäle (7) hat.

Walzenkühlung.

## Beschreibung

Die Erfindung bezieht sich auf eine Walze, insbesondere eine drehbare Walze für ein Fünfwalzwerk zur Schokoladenherstellung, nach dem Oberbegriff des Patentanspruchs 1.

Eine solche Walze ist aus der Praxis bekannt. Bei dieser Walze ist ein hohler Walzenkörper vorgesehen, in den das Kühlmittel über eine sogenannte Sprühlanze eingebracht und über die Länge der Walze verteilt wird. Üblicherweise wird das Kühlmittel mittels der Sprühlanze schräg nach oben gegen die Innenwand des Walzenkörpers gesprüht. Das Kühlmittel rinnt dann an der Innenwand des Walzenkörpers in dessen untere Hälfte, wo sich das Kühlmittel sammelt. Etwa in Höhe der Längsachse des Walzenkörpers wird das inzwischen erwärmte Kühlmittel abgezogen. Das Kühlmittel sammelt sich also in der unteren Hälfte des Walzenkörpers, so dass die Walze etwa zur Hälfte voll Kühlmittel läuft. Eine derartige Walze hat daher während ihres Betriebs ein relativ hohes Gewicht, was sich nachteilig auf die Herstellungs- und Betriebskosten auswirkt. Es ist klar, dass beispielsweise die Lager der Walze in diesem Fall für höhere Kräfte auszulegen sind. Ferner ist klar, dass das sich in der Walze befindende Kühlmittel bei einem Drehen der Walz mitbewegt wird, was zu einem erhöhten Energieverbrauch führt. Nachteilig ist ferner der relativ geringe Wärmeübergang zwischen der Walze und dem Kühlmittel, da mit Ungleichverteilungen des Kühlmittels über die innere Umiangswand des Walzenkörpers zumindest im Bereich der oberen Hälfte des Walzenkörpers und damit mit einem geringen Wärmeübergang zu rechnen ist. Nachteilig ist schließlich auch der erhöhte Kühlmittelverbrauch beim Betrieb derartiger Walzen.

Der Erfindung hegt die Aufgabe zugrunde, eine Walze der eingangs erwähnten Art zu schaf fen, welche wirtschaftlicher gekühlt werden kann.

Diese Aufgabe wird erfindungsgemäß durch eine Walze mit den Merkmalen des Patentanspruchs 1 gelöst.

Vorteilhafte Weiterbildungen sind Gegenstand der Unteransprüche.

Erfindungsgemäß ist die Kühleinrichtung auf der Basis einer zwangsgeführten Strömung des Kühlmittels wirkend ausgebildet. Damit ist zum einen eine gleichmäßige Verteilung des Kühlmittels über die Innenwand, d.h. die innere Umiangswand, des Walzenkörpers sichergestellt, damit ist zum ändern aber auch ein Einstellen der Strömungsgeschwindigkeit und damit letztlich des Wärmeübergangs zwischen dem Walzenkörper und dem Kühlmittel möglich. Eine definierte Strömungsgeschwindigkeit des Kühlmittels ermöglicht daher auch ein exaktes Einstellen der Oberflächentemperatur der Walze. Damit ist die Steuer- und Regelfähigkeit der erfindungsgemäßen Kühleinrichtung deutlich verbessert.

Vorteilhafterweise weist die Kühleinrichtung einen Führungskörper auf, welcher in den Walzenkörper einführbar, vorzugsweise einpressbar ist und auf seiner Außenfläche mehrere an das Kühlmittel anschließbare Kanäle hat, wobei die Kanäle vorzugsweise radial nach außen hin offen und im eingebauten Zustand des Führungskörpers durch die zylindrische Innenwand des Walzenkörpers begrenzt sind. Damit ist auch ein Nachrüsten herkömmlich gekühlter Walzenkörper möglich, so dass letztlich eine erfindungsgemäße Walze entstehen kann. Dazu ist es lediglich erforderlich, die erfindungsgemäß ausgebildete Kühleinrichtung im Innern des Walzenkörpers anzuordnen. Durch den Querschnitt der Kanäle und die Strömungsgeschwindigkeit lässt sich die Kühlmittelmenge ohne weiteres festlegen. Insofern befindet sich bei der erfindungsgemäßen Walze das Kühlmittel lediglich auf einer Ringfläche entlang der Innenwand des Walzenkörpers, so dass die Kühlmittelmenge insgesamt gegenüber einer herkömmlichem Walze beträchtlich, d.h. um ein Vielfaches, verringert werden kann. Dies wirkt sich, wie zuvor erwähnt, positiv auf die Herstelhings- und Betriebskosten der erfindungsgemäßen Walze aus. Günstig ist dabei, dass auch im Fall der erfmdungsgemäßen Walze das Kühlmittel in direkten Kontakt mit der zu kühlenden Fläche, nämlich der Innenwand des Walzenkörpers, in Berührung kommt. Dadurch lässt sich der Wärmeübergang gezielt steuern und dadurch auch beeinflussen.

Gemäß einer anderen Weiterbildung der Erfindung erstrecken sich die Kanäle in Längsrichtung des Führungskörpers. Dadurch ist die Kontaktzeit zwischen dem Kühlmittel und der zu kühlenden Fläche aufgrund des relativ langen Strömungsweges erhöht, was sich wiederum vorteilhaft auf den Wärmeübergang zwischen dem Kühlmittel und der zu kühlenden Fläche auswirkt.

Gemäß einer vorteilhaften Weiterbildung der Erfindung ist jeder Kanal beispielsweise in der Draufsicht U-förmig ausgebildet und sind die freien, nicht miteinander verbundenen Enden jedes Kanals an einen Kühlmittelzulauf bzw. an einen Kühlmittelablauf angeschlossen, wobei der Führungskörper vorzugsweise auf der Seite der freien Enden seiner Kanäle eine mit dem Kühlmittelzulauf jedes Kanals verbundene Kühlmittel-Zulaufkammer und eine mit dem Kühlmittelablauf jedes Kanals verbundene Kühlmittel-Ablaufkammer aufweist. Insofern steht für jeden Kanal etwa die doppelte Walzenlänge als Strömungsweg zur Verfügung, so dass für den Wärmeaustausch eine relativ lange Kontaktzeit zur Verfügung steht. Vorteilhaft ist dabei, dass Kühlmittelzuläufe sowie -abläufe auf derselben Seite des Walzenkörpers vorgesehen und ausgebildet sind, so dass letztlich lediglich eine Seite der erfindungsgemäßen Walze mit den Zu- und Abführungen für das Kühlmittel zu versehen ist. Es ist somit pro Walze lediglich eine Kühlmittel-Zulaufkammer und eine Kühlmittel-Ablaufkammer vorzusehen. Dadurch wird die sich in dem Walzenkörper befindende Kühlmittelmenge nur geringfügig erhöht.

Vorteilhafterweise sind beide Kühlmittelkammern zentral nach außen geführt und vorzugsweise mit einem Rotationsdichtkopf verbunden, welcher ein äußeres, feststehendes Gehäuseteil und ein inneres, mit den Kühlmittelkammern verbundenes, drehbares Gehäuseteil aufweist. Der Rotationsdichtkopf dient dazu, sowohl frisches Kühlmittel in die erfindungsgemäße Kühleinrichtung einzuspeisen, als auch erwärmtes Kühlmittel aus der Kühleinrichtung abzuziehen, wobei gleichzeitig ein Drehen der erfindungsgemäßen Walze möglich ist. Mit Hilfe des äußeren, feststehenden Gehäuseteils ist es möglich, den Kühlmittelzulauf und -ablauf am Rotationsdichtkopf fest zu installieren, so dass die Drehbewegung nicht in Bezug auf diese Anschlüsse stattfindet, sondern innerhalb des Rotationsdichtkopfes erfolgt.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine teilweise geschnittene Teil-Vorderansicht einer Walze, insbesondere einer drehbaren Walze für ein Fünfwalzwerk zur Schokoladenherstellung;
- Fig. 2: eine Vorderansicht einer Kühleinrichtung der Walze gemäß Fig. 1; und
- Fig. 3: einen Querschnitt III-III durch die Kühleinrichtung gemäß Fig. 2.

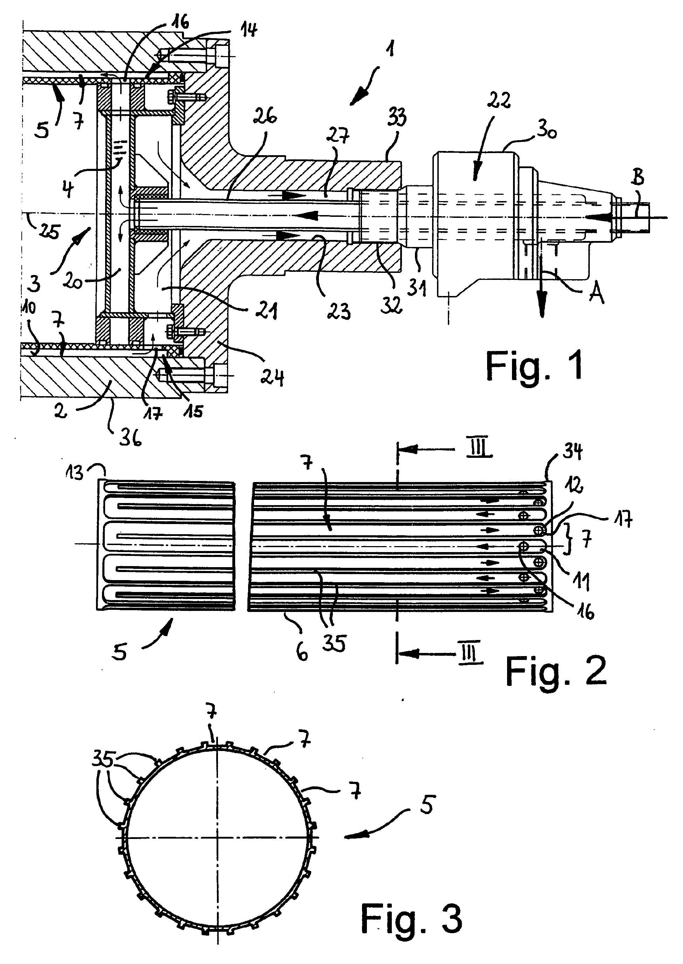

In Fig. 1 ist das rechte Ende einer Walze 1, insbesondere einer drehbaren Walze für ein nicht näher gezeigtes Fünfwalzwerk zur Schokoladenherstellung, teilweise im Längsschnitt gezeigt.

Die Walze 1 hat einen äußeren, zylindrischen Walzenkörper 2 und eine in dem Walzenkörper 2 angeordnete Einrichtung 3 zum Kühlen des Walzenkörpers 2 mittels eines in Fig. 1 lediglich schematisch angedeuteten, fluiden Kühlmittels 4.

Erfindungsgemäß ist die Kühleinrichtung 3 auf der Basis einer zwangsgeführten Strömung des Kühlmittels 4 wirkend ausgebildet. Dazu weist die Kühleinrichtung 3 einen Führungskörper 5, auch Verdrängerrohr genannt, auf. Der Führungskörper 5 ist derart dimensioniert, dass er in den Walzenkörper 2 einführbar, vorzugsweise einpressbar ist. Auf seiner Außenfläche 6 hat der Führungskörper 5 mehrere an das Kühlmittel 4 anschließbare Kanäle 7. Diese Kanäle erstrecken sich in Längsrichtung des Führungskörpers 5 und sind auf der gesamten Außenfläche 6 des Führungskörpers 5, jeweils geringfügig voneinander beabstandet, verteilt angeordnet, wie dies in den Fig. 2 und 3 gezeigt ist. Es ist klar, dass unter dem Begriff "Außenfläche" 6 die gesamte äußere, umfangsseitige Mantelfläche des Führungskörpers 5 verstanden wird.

Die Kanäle 7 sind radial nach außen hin offen und im eingebauten Zustand des Führungskörpers 5 durch die zylindrische Innenwand 10 des Walzenkörpers 2 begrenzt. Ein solcher Einbauzustand ist in Fig. 1 schematisch verdeutlicht.

Wie in Fig. 2 näher gezeigt, ist jeder Kanal 7 in der Draufsicht bzw. in der Vorderansicht U-förmig mit einem ersten Kanalabschnitt 11 und einem zweiten Kanalabschnitt 12 ausgebildet, welche auf dem in Fig. 2 linken Ende 13 des Führungskörpers 5 miteinander verbunden sind. Die freien, nicht miteinander verbundenen Enden 14, 15 jedes Kanals 7 sind an einen Kühlmittelzulauf 16 bzw. an einen Kühlmittelablauf 17 angeschlossen. Wie in Fig. 2 verdeutlicht und auch in Fig. 1 gezeigt, ist also der erste Kanalabschnitt 11 jedes Kanals 7 an den Kühlmittelzulauf 16 und der zweite Kanalabschnitt 12 jedes Kanals 7 an den Kühlmittelablauf 17 angeschlossen. Wie in Fig. 2 angedeutet, sind Kühlmittelzulauf und Kühlmittelablauf jeweils zueinander versetzt angeordnet. Diese versetzte Anordnung ergibt sich auch aus der Darstellung gemäß Fig. 1.

Der Führungskörper 5 weist auf der Seite der freien Enden 14, 15 seiner Kanäle, dies ist die Seite des Kühlmittelzulaufs 16 bzw. des Kühlmittelablaufs 17, eine mit dem Kuhhnittelzulauf 16 jedes Kanals 7 verbundene Kühlmittel-Zulaufkammer 20 und eine mit dem Kühlmittelablauf 17 jedes Kanals 7 verbundene Kühlmittel-Ablaufkammer 21 auf. Beide Kuhlmittelkammem 20, 21 sind, wie in Fig. 1 verdeutlicht, zentral nach außen geführt (dies ist in Fig. 1 die rechte Seite) und gemäß der in Fig. 1 gezeigten Ausführungsform mit einem Rotationsdichtkopf 22 verbunden. Wie in Fig. 1 verdeutlicht, sind die Kühlmittelkammern 20, 21 in axialer Richtung der Walze 1 nebeneinander angeordnet. In dem in Fig. 1 gezeigten Ausführungsbeispiel ist die Kühlmittel-Zulaufkammer 20 die linke Kammer, die Kühlmittelablaufkammer 21 die rechte Kammer.

An die Kammern schließt sich in Fig. 1 nach rechts hin ein mit einer Bohrung 23 versehener Flansch 24 an, welcher mit dem Walzenkörper 2 verschraubt und zum Führungskörper 5 hin abgedichtet ist. In der Bohrung 23 des Flansches 24 befindet sich, mit der Längsachse der Walze 1 fluchtend, ein zentrales Rohr 26 zum Zuführen des Kühlmittels 4 in die Kühlmittel-Zulaufkammer 20. Das zentrale Rohr 26 ist daher mit der Kühlmittel-Zulaufkammer 20 auf der einen Seite und mit dem Rotationsdichtkopf 22 auf der anderen Seite verbunden. Das zentrale Rohr 26 ist von einem ringförmigen Strömungsquerschnitt 27 für den Ablauf des Kühlmittels 4 umgeben. Auch dieser ringförmige Strömungsquerschnitt 27 steht in Fluidverbindung mit dem Rotationsdichtkopf 22 und dem Ablauf des erwärmten Kühlmittels, welches den Rotationsdichtkopf 22 in Richtung des Pfeils A verlässt. Das kalte Kühlmittel wird in Richtung des Pfeils B, d.h. mit der Längsachse 25 der Walze und des Führungskörpers 5 fluchtend, in den Rotationsdichtkopf 22 eingeleitet.

Der Rotationsdichtkopf 22 hat ein äußeres, feststehendes Gehäuseteil 30 und ein inneres, drehbares Gehäuseteil 31, das mit dem Flansch 24 verbunden ist. Das innere, drehbare Gehäuseteil 31 ist in eine Gewindebohrung 32 am äußeren, rechten Ende 33 der Bohrung 23 eingeschraubt.

Nachfolgend wird der Strömungsweg des Kühlmittels 4 näher erläutert.

Es wird davon ausgegangen, dass das kalte Kühlmittel 4 in Richtung des Pfeils B, mit der Längsachse 25 der Walze 1 fluchtend, in den Rotationsdichtkopf 22 zentral eintritt, diesen zentral durchströmt und dann über das zentrale Rohr 26 zunächst den Flansch 24, anschließend die Kühlmittel-Ablaufkammer 21 zentral durchströmt und dann in radialer Richtung in die Kuhlmittel-Zulaufkammer 20 geleitet wird. Aus der Kühlmittel-Zulaufkammer 20 tritt das Kühlmittel jeweils über den Kühlmittelzulauf 16 in den ersten Kanalabschnitt 11 ein. Das Kühlmittel strömt in den Fig. 1 und 2 nach links, wie durch die Pfeile verdeutlicht ist. Am linken Ende 13 des Führungskörpers 5 strömt das Kühlmittel dann in den zweiten Kanalabschnitt 12 ein. Der Wärmeübergang von dem warmen Walzenkörper 2 zum Kühlmittel 4 findet somit auf dem gesamten Strömungsweg des Kühlmittels von dem Kühlmittelzulauf 16 zum Kühlmittelablauf 17 statt. Dabei erwärmt sich das Kühlmittel Dieses strömt anschließend im zweiten Kanalabschnitt 12 wieder zurück, d.h. vom linken Ende 13 des Führungskörpers zum Kühlmittelablauf 17, welcher auf derselben Seite wie der Kühlmittelzulauf 16 angeordnet ist. In dem dargestellten Ausführungsbeispiel ist dies das rechte Ende 34 des Führungskörpers 5.

Der Strömungsweg des Kühlmittels 4 ist durch den Querschnitt der Kanäle 7 auf der einen Seite und durch die zylindrische Innenwand 10 des Walzenkörpers 2 begrenzt. Insofern findet ein direkter Kontakt zwischen dem Kühlmittel und der Innenwand 10 des Walzenkörpers statt. Das erwärmte Kühlmittel tritt dann durch den Kühlmittelablauf 17 in die Kühlmittel-Ablaufkammer 21 ein und strömt dann über den ringförmigen Strömungsquerschnitt 27 durch die Bohrung 23 des Flansches 24 hindurch, über das innere, drehbare Gehäuseteil 31 in das feststehende Gehäuseteil 30 des Rotationsdichtkopfes 22 und tritt schließlich aus letzterem in Richtung des Pfeils A aus.

Wie in den Fig. 2 und 3 verdeutlicht, befindet sich zwischen den Kanalabschnitten 11 und 12 jedes Kanals 7 und zwischen aneinander angrenzenden Kanälen 7 jeweils ein Steg 35. Die radial außen liegende Seite jedes Stegs kann leicht bogenförmig ausgebildet und an den Innenradius der Innenwand 10 des Walzenkörpers 2 angepasst sein. Diese Außenkante jedes Steges 13 liegt fest und abdichtend an der Innenwand 10 des Walzenkörpers 2 an. Es ist klar, dass die Menge an Kühlmittel, das beispielsweise Kühlwasser ist, genau definiert sein kann. Die Strömungsgeschwindigkeit des Kühlmittels ist je nach Bedarf einstellbar.

Es ist klar, dass an der Walze 1 auch Temperaturmessfühler vorgesehen sein können, welche die Temperatur des Walzenkörpers vorzugsweise auf dessen Außenfläche 36 ermitteln. Ferner können nicht näher gezeigte Regeleinrichtungen vorgesehen sein, welche die ermittelte Temperatur innerhalb bestimmter Grenzen durch Einstellen bzw. Verändern der pro Zeiteinheit eingeleiteten Kühlmittelmenge regeln.

Durch die Verbesserung der Kühhmg der Walze 1 lässt sich beispielsweise das Fünfwalzwerk mit höheren Durchsatzleistungen betreiben. Wie zuvor erwähnt, besteht zwischen dem Walzenkörper 2 und dem in dem Walzenkörper angeordneten Führungskörper 5 ein Pass- oder Presssitz. Vorzugsweise ist der Walzenkörper 2 innen ausgedreht. Es ist auch möglich, die erfindungsgemäße Kühleinrichtung 3 an bereits bestehenden Walzen nachzurüsten. Die Flansche 24 befinden sich an beiden Enden jedes Walzenkörpers. Sie weisen jedoch lediglich auf einer Seite die Bohrung 23 auf. Durch die Kühlmittel-Zulaufkammer 20 liegt das Kühlmittel gleichmäßig, d.h. mit derselben Temperatur, an jedem Kühlmittelzulauf 16 an. Wie in Fig. 3 gezeigt, hat der erfindungsgemäße Führungskörper 5 zwölf Kanäle 7, d.h. zwölf erste Kanalabschnitte 11 für den sogenannten Kaltwasservorlauf und zwölf zweite Kanalabschnitte 12 für den sogenannten Warmwasserrücklauf. Mit Hilfe der zwangsgeführten Strömung des Kühlmittels lässt sich eine konstante Oberflächentemperatur des Walzenkörpers erzielen. Wie zuvor erwähnt, strömt das Kühlmittel auf einer Seite in den Führungskörper herein und verlässt den Führungskörper auf derselben Seite.

Damit ist eine Walze, insbesondere eine drehbare Walze für ein Fünfwalzwerk zur Schokoladenherstellung, geschaffen, welche wirtschaftlicher gekühlt werden kann.

## Patentansprüche

1. Walze, insbesondere drehbare Walze für ein Fünfwalzwerk zur Schokoladenherstellung, mit einem äußeren, zylindrischen Walzenkörper (2) und einer in dem Walzenkörper (2) angeordneten Einrichtung (3) zum Kühlen des Walzenkörpers (2) mittels eines Kühlmittels (4),
**dadurch gekennzeichnet, dass**
die Kühleinrichtung (3) auf der Basis einer zwangsgeführten Strömung des Kühlmittels (4) wirkend ausgebildet ist.

2. Walze nach Anspruch 1, **dadurch gekennzeichnet, dass** die Kühleinrichtung (3) einen Führungskörper (5) aufweist, welcher in den Walzenkörper (2) einführbar, vorzugsweise einpressbar, ist und auf seiner Außenfläche (6) mehrere an das Kühlmittel (4) anschließbare Kanäle (7) hat.

3. Walze nach Anspruch 2, **dadurch gekennzeichnet, dass** die Kanäle (7) radial nach außen hin offen und im eingebauten Zustand des Führungskörpers (5) durch die zylindrische Innenwand (10) des Walzenkörpers (2) begrenzt sind.

4. Walze nach Anspruch 2 oder 3, **dadurch gekennzeichnet, dass** sich die Kanäle (7) in Längsrichtung des Führungskörpers (5) erstrecken.

5. Walze nach einem der Ansprüche 2 bis 4, **dadurch gekennzeichnet, dass** jeder Kanal (7) in der Draufsicht U-förmig ausgebildet ist und die freien, nicht miteinander verbundenen Enden (14, 15) jedes Kanals (7) an einen Kühlmittelzulauf (16) bzw. an einen Kühlmittelablauf (17) angeschlossen sind.

6. Walze nach Anspruch 5, **dadurch gekennzeichnet, dass** der Führungskörper (5) auf der Seite der freien Enden (14, 15) seiner Kanäle (7) eine mit dem Kühlmittelzulauf (16) jedes Kanals (7) verbundene Kühlmittel-Zulaufkammer (20) und eine mit dem Kühlmittelablauf (17) jedes Kanals (7) verbundene Kühlmittel-Ablaufkammer (21) aufweist.

7. Walze nach Anspruch 6, **dadurch gekennzeichnet, dass** beide Kühlmittelkammern (20, 21) zentral nach außen geführt und vorzugsweise mit einem Rotationsdichtkopf (22) verbunden sind.

8. Walze nach Anspruch 7, **dadurch gekennzeichnet, dass** der Rotationsdichtkopf (22) ein äußeres, feststehendes Gehäuseteil (30) und ein inneres, mit den Kühlmittelkammern (20, 21) verbundenes, drehbares Gehäuseteil (31) aufweist.
